# EUROPÄISCHE PATENTSCHRIFT

(11) **EP 0 621 181 B1**
(45) Veröffentlichungstag und Bekanntmachung des Hinweises auf die Patenterteilung: **16.04.1997**
(21) Anmeldenummer: 94102688.2
(22) Anmeldetag: 23.02.1994
(51) Int. Cl.: B65B 13/32, B23K 9/00

(54) **Verfahren und Vorrichtung zur Herstellung von Verschlüssen an Packstücke umgreifenden Bandeisenumreifungen**
Method and device for making joints in hoop iron packaging straps
Procédé et dispositif pour lier des feuillards de fer de cerclage d'emballages

(30) Priorität: 23.04.1993 DE 4313270
(43) Veröffentlichungstag der Anmeldung: 26.10.1994
(73) Patentinhaber: Fried. Krupp AG Hoesch-Krupp, 45143 Essen (DE)
(72) Erfinder: Bartzick, Gerd, D-58285 Gevelsberg (DE); Bühne, Gerd, D-58332 Schwelm (DE)

(56) Entgegenhaltungen:
- DE-A- 2 453 999
- LU-A- 68 482
- US-A- 2 628 301

## Beschreibung

Die Erfindung betrifft ein Verfahren und eine Vorrichtung zur Herstellung von Verschlüssen an Packstücke umgreifenden Bandeisenumreifungen, bei denen die sich überlappenden Enden des Umreifungsbandes durch Schweißen miteinander verbunden werden.

Aus der DE-PS 929 059 ist eine Vorrichtung zur Herstellung von Stahlband- und Bandeisenverbindungen mit einer Spann- und Abschneideeinrichtung bekannt, bei der zur Verbindung der Bandenden eine elektrische Punktschweißvorrichtung vorgesehen ist. Um das Punktschweißverfahren durchführen zu können, ist eine Punktschweißvorrichtung vorgesehen, die mit einem oder mehreren Schweißkontakten ausgestattet ist. Die Kontakte werden dabei auf die sich überlappenden Enden des Umreifungsbandes gedrückt, so daß der Strom die sich überlappenden Umreifungsbandenden durchfließt und bis zum Anschmelzen erhitzt.

Bei diesem Punktschweißen ist von Nachteil, daß es bei den in der Regel lackierten Stahlbändern oft Kontaktschwierigkeiten gibt und außerdem nutzen sich die Elektroden sehr schnell ab.

Es ist weiterhin aus den Anfängen der Verpackungsindustrie bekannt, die Bandenden durch Schweißnähte an den Stirnseiten und Längsseiten des Bandes zu verbinden. Solche Verbindungen sind jedoch nur schwer herstellbar und ergeben nur sehr geringe Verschlußfestigkeiten.

Der Erfindung liegt die Aufgabe zugrunde das Verfahren und die Vorrichtung zur Herstellung von Verschlüssen an Packstücke umgreifenden Bandeisenumreifungen zu verbessern, wobei gute elektrische Kontakte erzielt werden und auch alle sonstigen Teile eine lange Lebensdauer erhalten und wenig Wartung benötigen und außerdem die Größe und Lage der Schweißstelle auf dem Band genauer die optimalen Sollwerte erreicht. Außerdem soll ein Oxidieren an den aufschmelzenden Umreifungsbändern vermieden werden.

Diese Aufgabe ist erfindungsgemäß dadurch gelöst, daß die sich überlappenden Enden des Umreifungsbandes flächig aufeinander gehalten und durch berührungsloses Lichtbogenschweißen unter Zuführung von Inertgas teilweise über den Querschnitt unter Auslassung von am Rande der Längsseite liegenden Streifen und unter Auslassung eines die Stirseite enthaltenen Streifens miteinander verbunden werden, wobei die überlappenden Enden als Gegenelektrode dienen und die Schweißstelle während des Schweißens von der mechanischen Zugbelastung freigehalten wird.

Durch das Zuführen von Schutzgas wird in einfacher und zuverlässiger Weise ein Oxidieren an den aufschmelzenden Umreifungsbändern vermieden. Das Verschweißen erfolgt dabei mit einem Lichtbogen und zwar berührungslos, so daß auch Berührungen an den Umreifungsbändern vermieden werden. Die Schweißstelle wird dabei insbesondere im mittleren Bereich an der Langsmittelinie des Umreifungsbandes geschaffen.

Das berührungslose Verschweißen der sich überlappenden Enden des Umreifungsbandes kann mit einer mit der Gegenelektrode zusammenwirkenden Elektrode insbesondere Wolfram-Elektrode vorgenommen werden. Mit dieser Elektrode, insbesondere Wolfram-Elektrode ist in einfacher und zuverlässiger Weise ein berührungsloses Verschweißen der sich überlappenden Enden des Umreifungsbandes möglich, wobei die Wolfram-Elektrode beim bestimmungsgemäßen Gebrauch weitgehenst nicht abschmilzt.

Das mit der Elektrode erfolgende Lichtbogenschweißen kann in bekannter Weise durch einen Zündgenerator bei Annäherung berührungsfrei gezündet werden. Das Zünden kann somit in einfacher Weise berührungsfrei vorgenommen werden, wobei lediglich entsprechende Stromstärken und Abstände benutzt werden.

Das gleichzeitig zum Lichtbogenschweißen zugeführte Schutzgas kann von einem inerten Gas, wie Argon gebildet werden. Mit diesem, von Argon gebildeten Schutzgas ist somit in einfacher Weise das Verschweißen ohne oxidieren am schmelzenden Umreifungsband möglich.

Das berührungslose Verschweißen der sich überlappenden Enden des Umreifungsbandes kann mit begrenzt in Längsrichtung des Umreifungsbandes verschiebbarer Elektrode vorgenommen werden. Dadurch wandert in einfacher Weise der Punkt, an dem die Lichtbogenschweißung erfolgt, über den sich überlappenden Enden des Umreifungsbandes, so daß eine streifenförmige Schweißstelle erzielt wird, die sich in Längsrichtung des Umreifungsbandes erstreckt.

Die sich überlappenden Enden des Umreifungsbandes können im Bereich der Längsmittellinie des Umreifungsbandes miteinander verschweißt werden. Dadurch wird in vorteilhafter Weise eine längliche Schweißstelle erzielt.

Das Verschweißen kann in einem zumindest annähernd kreisförmigen Bereich vorgenommen werden. Dadurch wird ebenfalls in einfacher Weise eine großflächige Schweißstelle erzielt.

Mehr als ein kreisförmiger Bereich kann entlang der Längsmittellinie verschweißt werden. Dadurch wird ebenfalls in zuverlässiger Weise eine verhältnismäßig große Gesamtschweißstelle erzielt.

Eine beliebig lange Schweißstelle kann entlang der Längsmittellinie ausgeführt werden. Dadurch wird in einfacher Weise eine großflächige Schweißstelle geschaffen, die entlang der Längsmittelinie des Umreifungsbandes verläuft.

Dadurch, daß Schweißstelle während des Schweißens zumindest zum größten Teil von der mechanischen Zugbelastung freigehalten wird kann zuverlässig erreicht werden, daß an den Schweißstellen zumindest zum größten Teil keinerlei Zugbelastungen auftreten, die die Festigkeit der Schweißstelle beeinträchtigen könnten.

Die Elektrode kann während des Lichtbogenschweißens gekühlt werden. Dadurch wird in zuverlässiger Weise gewährleistet, daß die Elektrode beim bestimmungsgemäßen Schweißen nicht zu heiß wird.

Die Größe der Schweißelektrode und der Stromstärke und die Dauer des Lichtbogens kann derart bemessen sein, daß am obenliegenden Umreifungsbandende das Metall im Bereich des Lichtbogens durchgehend verflüssigt und zumindest der Oberbereich des untenliegenden Umreifungsbandendes bis zum ineinanderfließenden Aufschmelzen der Schweißstelle erhitzt wird. Dadurch wird in einfacher und zuverlässiger Weise eine Verbindung der beiden Enden des Umreifungsbandes geschaffen, die eine ausreichende Festigkeit aufweist. Die Verbindung ist dabei in einfacher Weise herstellbar. Am obenliegenden Umreifungsbandende wird das Metall im Bereich des Lichtbogens durchgehend verflüssigt, während zumindest am oberen Bereich des untenliegenden Umreifungsbandendes die Schweißstelle ebenfalls erhitzt wird, bis ein Ineinanderfließen der beiden Schmelzstellen erfolgt.

Die Vorrichtung zum Verschweißen der Enden eines Umreifungsbandes zur Durchführung des Verfahrens kann aus einer Vorrichtung mit einer herkömmlichen Umreifungsmaschine, vorzugsweise mit einem Umreifungskanal, mit einer Vorratsrolle und mit einer Zuführ- und Trennvorrichtung bestehen, bei der der verschlußbildende Teil von einer Einschweißelektrode und eine Bandführung aufweisenden Lichtbogenschweißeinrichtung gebildet ist. Die Vorrichtung zum Verschweißen der Enden des Umreifungsbandes kann somit eine herkömmliche Umreifungsmaschine, vorzugsweise mit einem Umreifungskanal aufweisen, wobei der Vorrichtung eine Vorratsrolle und eine Zuführ- und Trennvorrichtung zugeordnet ist. Der verschlußbildende Teil der Vorrichtung kann dabei von einer Lichtbogenschweißeinrichtung gebildet sein, die eine Schweißelektrode und eine Bandführung aufweist. Auf diese Weise kann in besonders einfacher Weise die Umreifung um das Packstück gelegt und gespannt und die sich überlappenden Bandenden miteinander verbunden werden.

Die Schweißelektrode kann über einen die Längsachse der Bandführung enthaltenen mittleren Bereich angebracht sein. Die Schweißelektrode ist somit vorteilhaft im mittleren Bereich der Längsachse der Bandführung vorgesehen, so daß die Verschweißungen der sich überlappenden Bandenden jeweils im mittleren Bereich der Bandenden erfolgen.

Die Elektrode kann an einer über die Längsmittellinie des Umreifungsbandes verschiebbaren Halteeinrichtung befestigt und die Halteeinrichtung mit einem Antrieb ausgestattet sein. Dadurch ist in einfacher Weise die Elektrode an einer verschiebbar angeordneten Halteeinrichtung vorgesehen, so daß ein länglicher Bereich der sich überlappenden Bandenden verschweißt werden kann, wobei das Verschieben der Elektrode mit einem Antrieb erfolgt.

Die das Umreifungsband tragende Bandführung kann unterhalb der Elektrode zumindest eine verkupferte Oberfläche aufweisen. Die das Umreifungsband tragende Bandführung ist somit vorteilhaft unterhalb der Elektrode mit einer zumindest verkupferten Oberfläche versehen, so daß eine zuverlässige Stromzuführung erfolgt. Dabei kann natürlich auch die mit der verkupferten Oberfläche versehene Bandführung durchgehend aus Kupfer gebildet sein.

Die Elektrode kann von einem Schutzgas zuführenden Rohr umgriffen sein. Die für das Lichtbogenschweißen erforderliche Elektrode wird somit in einfacher Weise von einem Rohr umgriffen, welches das Schutzgas zuführt. Die Schweißstelle ist somit in einfacher und zuverlässiger Weise durch das Schutzgas geschützt, während die Elektrode die erforderliche Lichtbogenschweißung durchführt.

Die Elektrode kann von einer Wolfram-Elektrode gebildet sein. Mit dieser Wolfram-Elektrode ist in einfacher und zuverlässiger Weise das Lichtbogenschweißen möglich, wobei die Wolfram-Elektrode beim Lichtbogenschweißen nicht oder nur sehr wenig abschmilzt.

Als Schutzgas ist ein inertes Gas, wie Argon benutzbar. Mit diesem von Argon gebildeten Schutzgas ist somit in einfacher Weise ein Oxidieren des Schweißmaterials vermeidbar.

Insbesondere am oberen Ende der Elektrode kann eine Kühlung, insbesondere eine Luftkühlung, Wasserkühlung od. dgl. vorgesehen sein. Dadurch ist in einfacher Weise ein Kühlen der Elektrode möglich.

Die Schweißeinrichtung kann mit einem Impulsgnerator versehen sein. Mit diesem Impulsgenerator ist in einfacher Weise ein berührungsfreies Zünden allein durch Verändern des Abstandes möglich.

Auf der Zeichnung ist die Erfindung in einem Ausführungsbeispiel dargestellt und zwar zeigen:
- Fig. 1: eine erfindungsgemäße Schweißeinrichtung in schematischer Darstellung, in einem vergrößerten Maßstab und teilweise weggebrochen und die
- Fig. 2-4: drei unterschiedliche Ausführungsformen der in die Umreifungsbandenden eingebrachten Schweißpunkte.

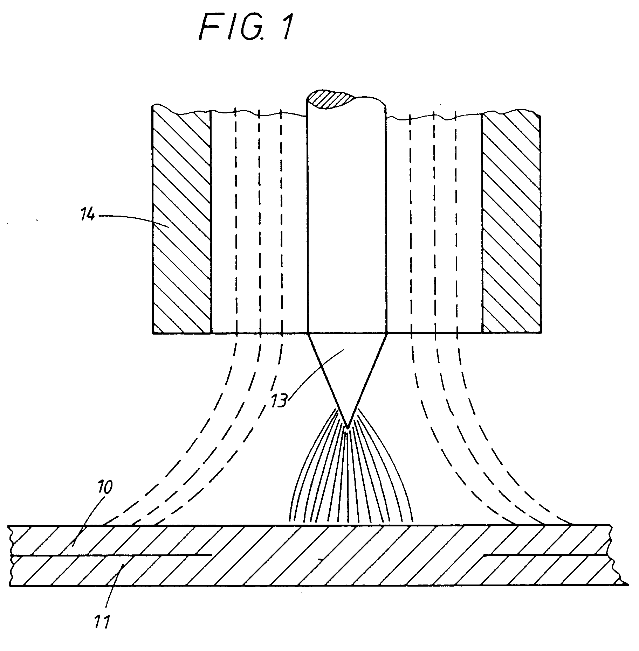

Die erfindungsgemäße Vorrichtung dient zur Herstellung von Verschlüssen an Packstücke umgreifenden Bandeisenumreifungen. Die sich überlappenden Enden 10, 11 des Umreifungsbandes 12 werden dabei durch Schweißen miteinander verbunden. Die sich überlappenden Enden 10, 11 des Umreifungsbandes 12 werden dabei, wie insbesondere aus der Fig. 1 ersichtlich, flächig aufeinandergehalten. Das Verschweißen erfolgt dann berührungslos mit einem Lichtbogen, bei gleichzeitigem Zuführen von Schutzgas. Wie aus der Fig. 1 ersichtlich, sind der Einfachheit halber von dem Umreifungsband 12 nur abgebrochene Enden 10, 11 in einem vergrößerten Maßstab dargestellt. Für das berührungslose Schweißen mit dem Lichtbogen ist eine Elektrode 13, und zwar vorzugsweise eine Wolfram-Elektrode vorgesehen. Die Wolfram-Elektrode 13 und das als Gegenelektrode dienende Umreifungsband 12 sind mit nicht näher dargestellten Stromzuführungsleitungen versehen, wobei eine stufenlose Schweißstromeinstellung möglich ist. Das Brennen des Lichtbogens mit der stufenlosen Schweißstromeinstellung erfolgt somit zwischen der nicht abschmelzenden Wolfram-Elektrode 13 und den sich überlappenden Umreifungsbandenden 10, 11 bis zum ineinanderfließenden Aufschmelzen. Nach der Beendigung des Schmelzvorganges erfolgt dann ein Erstarren der aufgeschmolzenen, sich überlappenden Umreifungsbandenden 10, 11, wodurch eine zuverlässige Verbindung der beiden sich überlappenden Umreifungsbandenden 10, 11 erzielt wird.

Das Brennen des Lichtbogens mit stufenloser Schweißstromeinstellung kann mit einem nicht näher dargestellten Impulsgenerator durch Veränderung des Abstandes berührungslos gezündet werden. Dadurch ist in einfacher Weise ein berührungsloses Zünden möglich.

Das berührungslose Verschweißen mit dem Lichtbogen erfolgt bei gleichzeitigem Zuführen von Schutzgas. Als Schutzgas wird dabei ein inertes Gas, wie Argon benutzt. Wie bereits erläutert, weist die Schweißvorrichtung für das mit dem Lichtbogen bewirkte Verbinden der Umreifungsbandenden 10, 11 eine Elektrode 13 auf, die von einem das Schutzgas zuführenden Rohr 14 umgriffen ist. Mit diesem Rohr 14 wird somit in einfacher Weise das Schutzgas der Schweißvorrichtung zugeführt. Das durch das Aufschmelzen gebildete Schmelzbad wird somit zuverlässig durch das inerte Schutzgas abgedeckt. Durch das Schutzgas wird in einfacher Weise erreicht, daß das Schmelzbad kein Oxidieren durch den Sauerstoff der Umgebungsluft durchmachen muß.

Beim bestimmungsgemäßen Gebrauch der Schweißvorrichtung kann die Wolfram-Elektrode 13 nicht oder kaum abschmelzen. Dieses kann noch dadurch unterstützt werden, daß die Elektrode 13 mit Luft oder Wasser gekühlt wird.

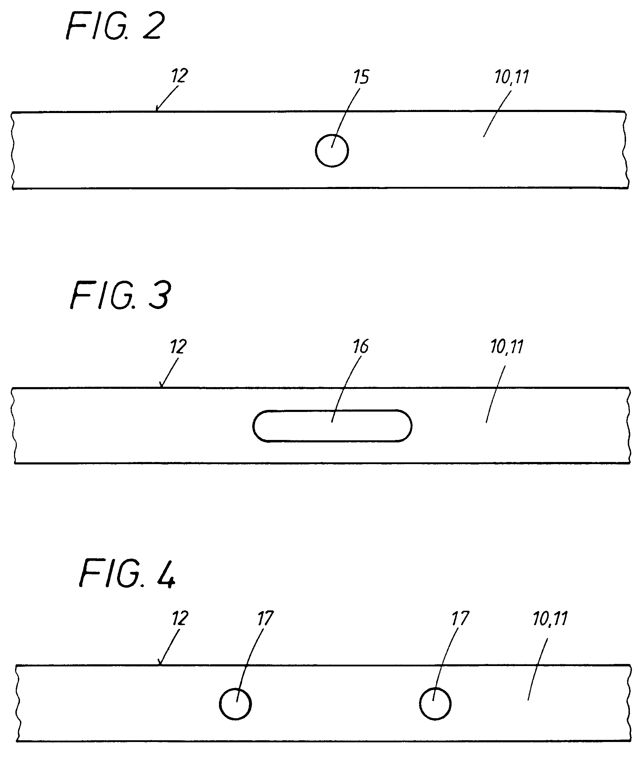

Wie insbesondere aus der Fig. 2 ersichtlich, kann das Verschweißen der sich überlappenden Umreifungsbandenden 10, 11 mit einer punktförmigen Schweißstelle erfolgen. Beim dargestellten Ausführungsbeispiel weist dabei die punktförmige und kreisrunde Schweißstelle etwa einen Durchmesser von 8mm auf, während das Umreifungsband 12 eine Breite von etwa 19mm aufweist. Damit wird eine zuverlässige Verschweißung der sich überlappenden Umreifungsbandenden 10, 11 mit einem einzigen Schweißpunkt erreicht, wobei die Festigkeit der Schweißverbindung schon etwa 80% der Festigkeit des Umreifungsbandes erreichen kann.

Wie aus der Fig. 3 ersichtlich, kann das berührungslose Verschweißen der sich überlappenden Enden 10, 11 des Umreifungsbandes 12 mit begrenzt in Längsrichtung des Umreifungsbandes 12 verschiebbarer Elektrode 13 vorgenommen werden. Dadurch wird eine streifenförmige Schweißstelle 16 erzielt, wie sie in der Fig. 3 dargestellt ist. Die Schweißstelle 16 weist dabei gegenüber der in der Fig. 2 dargestellte kreisrunden, punktförmigen Schweißstelle 15 eine wesentlich größere Fläche auf. Durch die größere Fläche der Schweißstelle wird eine größere Festigkeit der Schweißstelle des Umreifungsbandes 12 erzielt.

Wie aus der Fig. 4 ersichtlich, können die sich überlappenden Enden 10, 11 des Umreifungsbandes 12 auch mit zwei im Abstand zueinander angeordneten Schweißstellen 17 miteinander verbunden werden. Auch dadurch wird eine sehr hohe Festigkeit der Schweißverbindung erzielt. Dabei können die beiden Schweißstellen 17 auch noch etwas seitlich zueinander versetzt sein.

Den Fig. 2-4 ist zu entnehmen, daß die sich überlappenden Enden 10, 11 des Umreifungsbandes 12 im Bereich der Langsmittellinie des Umreifungsbandes 12 miteinander verschweißt sind. Das Verschweißen wurde dabei insbesondere, bei dem in Fig. 2 dargestellten Ausführungsbeispiel in einem zumindest annähernd kreisförmigen Bereich vorgenommen. Es kann auch mehr als ein kreisförmiger Bereich entlang der Längsmittellinie des Umreifungsbandes 12 verschweißt werden. Die Schweißstelle entlang der Längsmittellinie des Umreifungsbandes 12 kann auch als beliebig lange Schweißstelle ausgeführt werden. Damit im Bereich der Schweißstelle eine zuverlässige Verbindung der sich überlappenden Bandenden erzielt wird, muß die Schweißstelle der beiden Bandenden 10, 11 während des Schweißens von der mechanischen Zugbelastung freigehalten werden.

Wie bereits erwähnt, sind die dargestellten Ausführungen lediglich beispielsweise Verwirklichungen der Erfindung und diese nicht darauf beschränkt. Vielmehr sind noch manche oder andere Ausführungen und Abänderungen möglich.

Es ist beispielsweise auch eine Abänderung dahingehend möglich, daß eine oder auch mehrere Schweißstellen außerhalb der Mittellinie angeordnet sind. Es ist nur entscheidend, daß zu den Rändern noch ein gewisser, das flüssige Schweißbad schützender, nicht verschweißter Bereich stehen bleibt. Das Schweißbad wird von unter dadurch abgestützt, daß die Umreifungsbandführung unterhalb der Elektrode aus Kupfer besteht oder zumindest eine verkupferte Oberfläche aufweist.

## Patentansprüche

1. Verfahren zur Herstellung von Verschlüssen an Packstücke umgreifenden Bandeisenumreifungen, bei denen die sich überlappenden Enden (10, 11) des Umreifungsbandes (12) durch Schweißen mit einander verbunden werden,
**dadurch gekennzeichnet,**
daß die sich überlappenden Enden (10, 11) des Umreifungsbandes (12) flächig aufeinander gehalten und durch berührungsloses Lichtbogenschweißen unter Zuführen von Inertgas teilweise über den Querschnitt unter Auslassung von am Rande der Längsseiten liegenden Streifen und unter Auslassung eines die Stirnseite enthaltenen Streifens miteinander verbunden werden, wobei die überlappenden Enden als Gegenelektrode dienen und die Schweißstelle während des Schweißens von der mechanischen Zugbelastung freigehalten wird.

2. Verfahren nach Anspruch 1, dadurch gekennzeichnet, daß das berührungslose Verschweißen der sich überlappenden Enden (10, 11) des Umreifungsbandes (12) mit einer mit der Gegenelektrode zusammenwirkenden Elektrode, insbesondere Wolfram-Elektrode (13) vorgenommen wird.

3. Verfahren nach Anspruch 1 oder 2, dadurch gekennzeichnet, daß das mit der Elektrode (13) erfolgende Lichtbogenschweißen in bekannter Weise durch einen Zündgenerator bei Annäherung berührungsfrei gezündet wird.

4. Verfahren nach einem der Ansprüche 1 bis 3, dadurch gekennzeichnet, daß das gleichzeitig zum Lichtbogenschweißen zugeführte Schutzgas von einem inerten Gas, wie Argon gebildet wird.

5. Verfahren nach einem der Ansprüche 1 bis 4, dadurch gekennzeichnet, daß das berührungslose Verschweißen der sich überlappenden Enden (10, 11) des Umreifungsbandes (12) mit begrenzt in Längsrichtung des Umreifungsbandes (12) verschiebbarer Elektrode (13) vorgenommen wird.

6. Verfahren nach einem der Ansprüche 1 bis 5, dadurch gekennzeichnet, daß die sich überlappenden Enden (10, 11) des Umreifungsbandes (12) im Bereich der Längsmittellinie des Umreifungsbandes (12) miteinander verschweißt werden.

7. Verfahren nach einem der Ansprüche 1 bis 6, dadurch gekennzeichnet, daß das Verschweißen in einem zumindest annähernd kreisförmigen Bereich vorgenommen wird.

8. Verfahren nach einem der Ansprüche 1 bis 7, dadurch gekennzeichnet, daß mehr als ein kreisförmiger Bereich entlang der Längsmittellinie verschweißt wird.

9. Verfahren nach einem der Ansprüche 1 bis 8, dadurch gekennzeichnet, daß eine beliebig lange Schweißstelle entlang der Längsmittellinie ausgeführt wird.

10. Verfahren nach einem der Ansprüche 1 bis 9, dadurch gekennzeichnet, daß die Elektrode (13) während des Lichtbogenschweißens gekühlt wird.

11. Verfahren nach einem der Ansprüche 1 bis 10, dadurch gekennzeichnet, daß die Größe der Schweißelektrode (13) und der Stromstärke und die Dauer des Lichtbogens derart bemessen sind, daß am obenliegenden Umreifungsbandende (10) das Metall im Bereich des Lichtbogens durchgehend verflüssigt und zumindest der obere Bereich des untenliegenden Umreifungsbandes (11) bis zum ineinanderfließenden Aufschmelzen der Schweißstelle erhitzt wird.

12. Vorrichtung zum Verschweißen der sich überlappenden Enden (10, 11) eines Umreifungsbandes (12) bestehend aus einer herkömmlichen Umreifungsmaschine, vorzugsweise mit einem Umreifungskanal, einer Vorratsrolle, einer Schweißvorrichtung und einer Zuführ- und Trennvorrichtung dadurch gekennzeichnet, daß die Schweißvorrichtung aus einer eine Schweißelektrode (13) und eine Bandführung aufweisenden, berührrungslosen Lichtbogenschweißeinrichtung mit Inertgaszufuhr besteht, wobei die überlappenden Enden des Umreifungsbandes als Gegenelektrode dienen und die Schweißstelle während des Schweißens von der mechanischen Zugbelastung freigehalten wird.

13. Vorrichtung nach Anspruch 12, dadurch gekennzeichnet, daß die Schweißelektrode (13) über einen die Längsachse der Bandführung enthaltenden mittleren Bereich angebracht ist.

14. Vorrichtung nach Anspruch 12 und 13, dadurch gekennzeichnet, daß die Elektrode (13) an einer über die Längsmittellinie des Umreifungsbandes (12) verschiebbaren Halteeinrichtung befestigt und die Halteeinrichtung mit einem Antrieb ausgestattet ist.

15. Vorrichtung nach einem der Ansprüche 12 bis 14, dadurch gekennzeichnet, daß die das Umreifungsband tragende Bandführung unterhalb der Elektrode (13) zumindest eine verkupferte Oberfläche aufweist.

16. Vorrichtung nach einem der Ansprüche 12 bis 15, dadurch gekennzeichnet, daß die Elektrode (13) von einem Schutzgas zuführenden Rohr (14) umgriffen ist.

17. Vorrichtung nach einem der Ansprüche 12 bis 16, dadurch gekennzeichnet, daß die Elektrode (13) von einer Wolfram-Elektrode gebildet ist.

18. Vorrichtung nach einem der Ansprüche 12 bis 17, dadurch gekennzeichnet, daß als Schutzgas ein inertes Gas, wie Argon, benutzbar ist.

19. Vorrichtung nach einem der Ansprüche 12 bis 18, dadurch gekennzeichnet, daß insbesondere am oberen Ende der Elektrode (13) eine Kühlung, insbesondere eine Luftkühlung, Wasserkühlung od.dgl., vorgesehen ist.

20. Vorrichtung nach einem der Ansprüche 12 bis 19, dadurch gekennzeichnet, daß die Schweißeinrichtung mit einem Impulsgenerator versehen ist.

## Claims

1. A method of producing closures on steel tape hoops around packaged units, wherein the overlapping ends (10,11) of the hoops (12) are connected to each other by welding, characterised in that the overlapping ends (10, 11) of the hoop (12) are held one above the other surface-to-surface and are connected to each other partially over the cross-section by non-contact arc-welding while adding inert gas in such a manner that strips lying at the edge of the longitudinal sides are omitted and a strip containing the end face is omitted, wherein the overlapping ends serve as a counter electrode and the weld joint is maintained free of mechanical tensile load during the welding process.

2. A method according to claim 1, characterised in that the non-contact welding of the overlapping ends (10, 11) of the hoop (12) is carried out using an electrode, in particular a tungsten electrode (13), which co-operates with the counter electrode.

3. A method according to claim 1 or 2, characterised in that the arc-welding carried out using the electrode (13) is ignited in a situation of proximity but without contact in a known manner by means of an ignition generator.

4. A method according to any one of claims 1 to 3, characterised in that the protective gas added simultaneously with the arc-welding process is formed by an inert gas such as argon.

5. A method according to any one of claims 1 to 4, characterised in that the non-contact welding of the overlapping ends (10, 11) of the hoops (12) is carried out using the electrode (13) which has a limited amount of movement in the lengthwise direction of the hoop (12).

6. A method according to any one of claims 1 to 5, characterised in that the overlapping ends (10, 11) of the hoop (12) are welded together in the region of the lengthwise centre line of the hoop (12).

7. A method according to any one of claims 1 to 6, characterised in that the welding is carried out in a region which is at least almost circular in shape.

8. A method according to any one of claims 1 to 7, characterised in that more than one circular region is welded along the lengthwise centre line.

9. A method according to any one of claims 1 to 8, characterised in that any desired length of weld joint is produced along the lengthwise centre line.

10. A method according to any one of claims 1 to 9, characterised in that the electrode (13) is cooled during the arc-welding process.

11. A method according to any one of claims 1 to 10, characterised in that the size of the welding electrode (13) and the strength of current and the duration of the arcing are such that at the upper-lying hoop end (10) the metal in the region of the arcing is continuously liquefied and at least the upper region of the hoop end (11) lying below is heated until the weld joint melts flowing into each other.

12. A device for welding the overlapping ends (10,11) of a hoop (12) consisting of a conventional hoop-sing machine, preferably having a hooping channel, a supply tape reel, a welding device and a feed and separating device, characterised in that the welding device consists of a non-contact arc-welding device which comprises a welding electrode (13) and a tape guide and inert gas is added, wherein the overlapping ends of the hoop serve as a counter electrode and the weld joint is maintained free of mechanical tensile load during the welding process.

13. A device according to claim 12, characterised in that the welding electrode (13) is applied over a central region containing the longitudinal axis of the tape guide.

14. A device according to claim 12 and 13, characterised in that the electrode (13) is attached at a holding device which can be displaced over the lengthwise centre line of the hoop (12) and the holding device is equipped with a drive.

15. A device according to any one of claims 12 to 14, characterised in that the surface of tape guide supporting the hoop is at least copper plated below the electrode (13).

16. A device according to any one of claims 12 to 15, characterised in that the electrode (13) is surrounded by a tube (14) carrying a protective gas.

17. A device according to any one of claims 12 to 16, characterised in that the electrode (13) is formed by a tungsten electrode.

18. A device according to any one of claims 12 to 17, characterised in that an inert gas such as argon can be used as the protective gas.

19. A device according to any one of claims 12 to 18, characterised in that in particular at the upper end of the electrode (13) is provided a cooling process, which is in particular air-cooled or water cooled or similar.

20. A device according to any one of claims 12 to 19, characterised in that the welding device is provided with a pulse generator.

## Revendications

1. Procédé pour lier des cerclages en feuillard entourant des paquets, dans lequel les extrémités superposées (10, 11) du feuillard de cerclage (12) sont reliées l'une à l'autre par soudage,
caractérisé en ce que
les extrémités superposées (10, 11) du feuillard de cerclage (12) sont maintenues à plat l'une sur l'autre et sont reliées l'une à l'autre par soudage à l'arc sans contact, avec apport de gaz inerte sur une partie de la section transversale, à l'exception des bandes situées sur le bord des côtés longitudinaux, et à l'exclusion d'une bande contenant le bord frontal, dans lequel les extrémités superposées servent de contre-électrode et la zone de soudage est libérée de la contrainte mécanique de traction pendant le soudage.

2. Procédé selon la revendication 1, caractérisé en ce que le soudage sans contact des extrémités superposées (10, 11) du feuillard de cerclage (12) est réalisé avec une électrode coopérant avec la contre-électrode, et en particulier une électrode au tungstène (13).

3. Procédé selon la revendication 1 ou 2, caractérisé en ce que le soudage à l'arc effectué avec l'électrode (13) est amorcé sans contact de manière connue, par un générateur d'amorçage, lors du rapprochement.

4. Procédé selon l'une des revendications 1 à 3, caractérisé en ce que le gaz protecteur apporté pendant le soudage à l'arc est constitué d'un gaz inerte comme l'argon.

5. Procédé selon l'une des revendications 1 à 4, caractérisé en ce que le soudage sans contact des extrémités superposées (10, 11) du feuillard de cerclage (12) est entrepris avec une électrode (13) pouvant être déplacée de manière limitée dans la direction longitudinale du feuillard de cerclage (12).

6. Procédé selon l'une des revendications 1 à 5, caractérisé en ce que les extrémités superposées (10, 11) du feuillard de cerclage (12) sont soudées l'une à l'autre dans la région de l'axe longitudinal du feuillard de cerclage (12).

7. Procédé selon l'une des revendications 1 à 6, caractérisé en ce que le soudage est effectué dans une région au moins approximativement circulaire.

8. Procédé selon l'une des revendications 1 à 7, caractérisé en ce que plus d'une région de forme circulaire est soudée le long de l'axe longitudinal.

9. Procédé selon l'une des revendications 1 à 8, caractérisé en ce que l'on réalise un cordon de soudage de longueur quelconque le long de l'axe longitudinal.

10. Procédé selon l'une des revendications 1 à 9, caractérisé en ce que l'électrode (13) est refroidie pendant le soudage à l'arc.

11. Procédé selon l'une des revendications 1 à 10, caractérisé en ce que la taille de l'électrode de soudage (13) et l'intensité du courant et la durée de l'arc sont proportionnées de telle sorte que, à l'extrémité supérieure (10) du feuillard de cerclage, le métal se liquéfie complètement dans la région de l'arc, et au moins la région supérieure du feuillard de cerclage (11) situé par-dessous est chauffée jusqu'à fusion de la zone de soudage.

12. Dispositif de soudage des extrémités (10, 11) superposées d'un feuillard de cerclage (12), comprenant une machine de cerclage classique, comportant de préférence un canal de cerclage, un rouleau de réserve, un dispositif de soudage et un dispositif d'amenée et de découpe, caractérisé en ce que le dispositif de soudage comprend un moyen de soudage à l'arc sans contact, présentant une électrode de soudage (13) et un guide de feuillard, avec une alimentation en gaz inerte, dans lequel les extrémités superposées du feuillard de cerclage servent de contre-électrode et la zone de soudage est libérée de la contrainte mécanique de traction pendant le soudage.

13. Dispositif selon la revendication 12, caractérisé en ce que l'électrode de soudage (13) est installée dans une région médiane contenant l'axe longitudinal du guide de feuillard.

14. Dispositif selon la revendication 12 et 13, caractérisé en ce que l'électrode (13) est fixée à un dispositif de maintien pouvant être déplacé le long de l'axe longitudinal du feuillard de cerclage (12), et le dispositif de maintien est équipé d'un entraînement.

15. Dispositif selon l'une des revendications 12 à 14, caractérisé en ce que le guide feuillard portant le feuillard de cerclage présente au moins une surface cuivrée en dessous de l'électrode (13).

16. Dispositif selon l'une des revendications 12 à 15, caractérisé en ce que l'électrode (13) est entourée par un tube (14) d'amenée d'un gaz protecteur.

17. Dispositif selon l'une des revendications 12 à 16, caractérisé en ce que l'électrode (13) est constituée d'une électrode au tungstène.

18. Dispositif selon l'une des revendications 12 à 17, caractérisé en ce que l'on utilise comme gaz protecteur un gaz inerte comme l'argon.

19. Dispositif selon l'une des revendications 12 à 18, caractérisé en ce qu'un refroidissement, en particulier un refroidissement par air, un refroidissement par eau ou similaire, est prévu en particulier à l'extrémité supérieure de l'électrode (13).

20. Dispositif selon l'une des revendications 12 à 19, caractérisé en ce que le dispositif de soudage est pourvu d'un générateur d'impulsions.
